# EUROPEAN PATENT SPECIFICATION

(11) **EP 0 985 348 B1**
(45) Date of publication and mention of the grant of the patent: **02.06.2004**
(21) Application number: 99610051.7
(22) Date of filing: 10.09.1999
(51) Int. Cl.: A22B 5/00, A22B 5/20

(54) **Method and apparatus for longitudinal cutting of the middles of half carcases**
Verfahren und Vorrichtung zum Längsschneiden von Karkassenhälften
Procédé et dispositif de découpe longitudinale de demi-carcasses

(30) Priority: 10.09.1998 DK 114298
(43) Date of publication of application: 15.03.2000
(73) Proprietor: ATTEC DANMARK A/S, DK-6470 Sydals (DK)
(72) Inventor: Madsen, Allan, 6440 Augustenborg (DK)
(74) Representative: Jensen, Peter Kim

(56) References cited:
- WO-A-97/17853
- FR-A- 1 517 853
- US-A- 3 546 737
- US-A- 3 744 407
- US-A- 5 611 727
- US-A- 5 725 424

## Description

The invention relates to an apparatus and a method of the type described in claims 1 and 10, respectively, for longitudinal cutting of the middles of half carcasses by means of a rotating knife.

Today, many slaughter and cutting processes, including the separation of half carcasses into fore-ends, middles and hams, are automated. However, presently the cutting of middles is performed manually, which involves heavy, strenuous and tedious work.

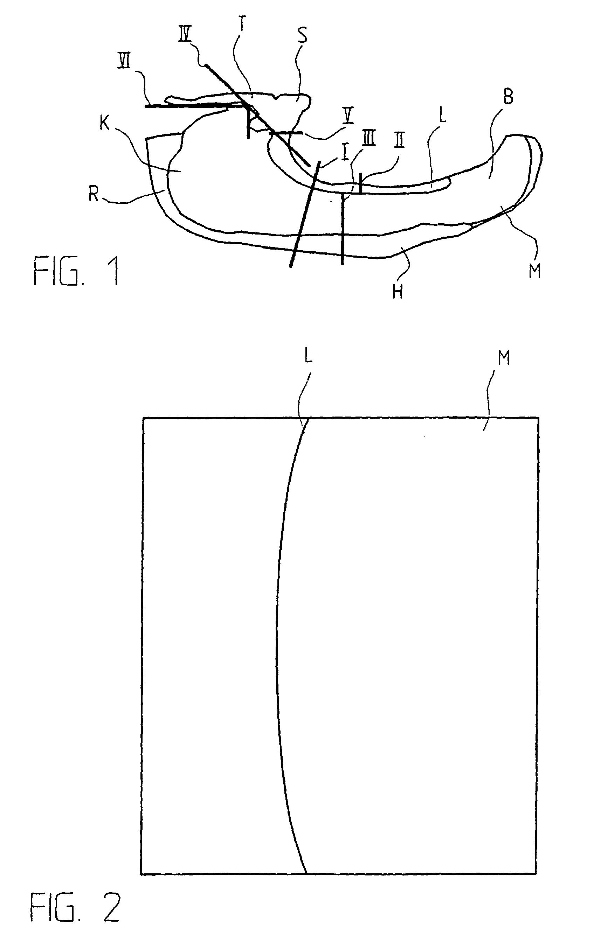

Today, the most common cuttings of middles M are as follows (confer also Figure 1 diagrammatically illustrating a cut through a middle):
I. longitudinal splitting of the middle into loin (K) and belly (B),
II. longitudinal splitting, ie cutting of the ribs (L), but without cutting into the meat,
III. longitudinal cutting of the meat, but without cutting into the ribs (L) and
IV. sawing off the rib-top for removal of most of the spine.

The longitudinal splitting of the middle into belly and loin is today the most common cutting process and is performed along a slightly curved line, as shown in Figure 2 which is a diagrammatic view of a middle M seen from the bone side. The splitting is usually performed manually by placing the middle with its rind side facing downwards on a work table and guiding it through a band saw or a rotating circular knife whose axis is arranged above the plane of the table. In addition to involving very heavy, strenuous and tedious work, the use of a band saw results in a substantial waste in form of meat chips, while a knife with an axis above the middle presses splinters of bone into the meat.

Furthermore, US 5,611,727 and US 5,725,424 disclose a machine and a method for mechanical longitudinal cutting of a middle and whereby a complete through cutting is performed from above, ie from the side of the bone of the middle, by means of a rotating knife for splitting the middle into belly and loin. Since the cutting is performed from the bone side, these machines and methods are encumbered by the same drawbacks as mentioned above, viz. splinters of bone in the meat or waste in form of meat chips.

The object of the present invention is to provide an apparatus and a method which enable automated longitudinal cutting of middles without being encumbered by the drawbacks known from prior art.

The apparatus and method according to the invention are characterised by the characterising features stated in claims 1 and 10, respectively.

By thus cutting the middle from below, it is possible - when desired - to cut only the meat up to ribs or additionally to cut through the ribs and thereby dividing the middle into loin and belly. Moreover, in practice it has been shown that when cutting completely through the middle from below with a conventional circular knife of a diameter substantially larger than the thickness of the middle and the edge thereof only extending slightly through the middle, bone parts are prevented from being pressed into the meat. According to an embodiment of the invention it is thus preferred at a complete cutting of the middle that the cutting tool is a rotating circular knife with an axis of rotation below the path of conveyance of the middle. When the middle is to be cut up to the ribs, a non-rotating knife may, however, also be used, said knife having a blade shape substantially corresponding to the shape of a conventional butcher's knife.

Furthermore according to the invention the conveyor device of the apparatus may comprise a roller or belt conveyor provided with a longitudinal slot for the cutting tool.

Moreover according to the invention the positioning device of the apparatus may comprise a support member arranged displaceably in transverse direction of the conveyor belt and adapted to be brought into engagement with the dorsal side of the spinal column, and a fixing means arranged displaceably in the transverse direction of the conveyor belt for securing the middle in relation to the support member.

In this connection the support member may have a support surface comprising at least three support surface areas adapted to engage the middle adjacent the front, centre and rearmost portions thereof, respectively. When the middle is secured by the fixing means the at least three support surface areas of the support member determine the shape of the spine when seen in a top view and are thus in a top view preferably arranged on a slightly convex surface so as to provide the spine with a slightly convex shape, whereby the preferred slightly curved cut is obtained at a rectilinear, relative movement between the cutting tool and the middle.

In order to alter the shape of the support surface and thus the shape of the spine, the at least three support surface areas may be arranged mutually adjustable such that at least the front and rearmost support surface areas may be adjusted in transverse direction in relation to the centre support surface area.

Furthermore according to the invention the conveyor device may comprise: - a first section comprising a roller or belt conveyor for supportingly conveying the middles, - guide members for guiding the middles into the predetermined transverse position, and - a second section following the first conveyor device section in the direction of conveyance and comprising a driven continuous conveyor provided with gripping members which are adapted to engage parts of the spinal column of the middle and to convey said middle in the predetermined transverse position during longitudinal cutting thereof.

Moreover according to the invention the second conveyor device section may comprise support members for supporting the middle from below, ie from the rind side, during the cutting thereof. The second conveyor apparatus section may also comprise support members for supporting the middle from above, ie. from the rib side, during cutting thereof.

With a view to obtaining different cuts of the middle the apparatus according to the invention may further comprise a second cutting tool, preferably a rotating circular knife, for longitudinal cutting of the ribs from the bone side of the middle without substantially cutting into the meat. This cutting tool may advantageously be displaceably arranged in the transverse direction. As a result it is possible to cut through the ribs at the same position as the middle is cut up to the ribs by means of the first cutting tool. It is however also possible to cut through the ribs in a transversely offset position in relation to the latter cut performed by means of the first cutting tool. In connection with the cutting of the middle, the apparatus may preferably further comprise a cutting tool for freeing the meat from the ribs adjacent the meat side of the ribs between the two cuts, thereby separating the loin and the belly. Furthermore according to the invention the apparatus may further comprise a third cutting tool, preferably a rotating circular saw, for longitudinal cutting of the ribs just below the spinal column without substantially cutting into the meat (cut V in Figure 1).In connection with this cutting the apparatus may further comprise a cutting tool for separating the meat from the spinal column. The cut of this cutting tool is denoted by the reference numeral VI in Figure 1.

Moreover the apparatus according to the invention may be provided with a fourth cutting tool for rib-top sawing for removal of at least the major part of the spinal column.

The invention is explained in greater detail below with reference to the accompanying drawings, in which
Figure 1 is a diagrammatic sectional view of a middle of a half pig carcass,
Figure 2 illustrates the same in a diagrammatic top view,
Figure 3 is a diagrammatic end view of a apparatus according to the invention for longitudinal cutting of middles,
Figure 4 illustrates the apparatus in Figure 3 in a diagrammatic side view,
Figure 5 illustrates the apparatus in Figures 3 and 4 in a diagrammatic top view and
Figure 6 is a diagrammatic side view of another embodiment of a apparatus according to the invention,
Figure 7 is a top view of front parts of the apparatus in Figure 6,
Figure 8 is a sectional view along the line VIII-VIII in Figure 6 on a larger scale, and
Figure 9 shows the detail IX in Figure 8.

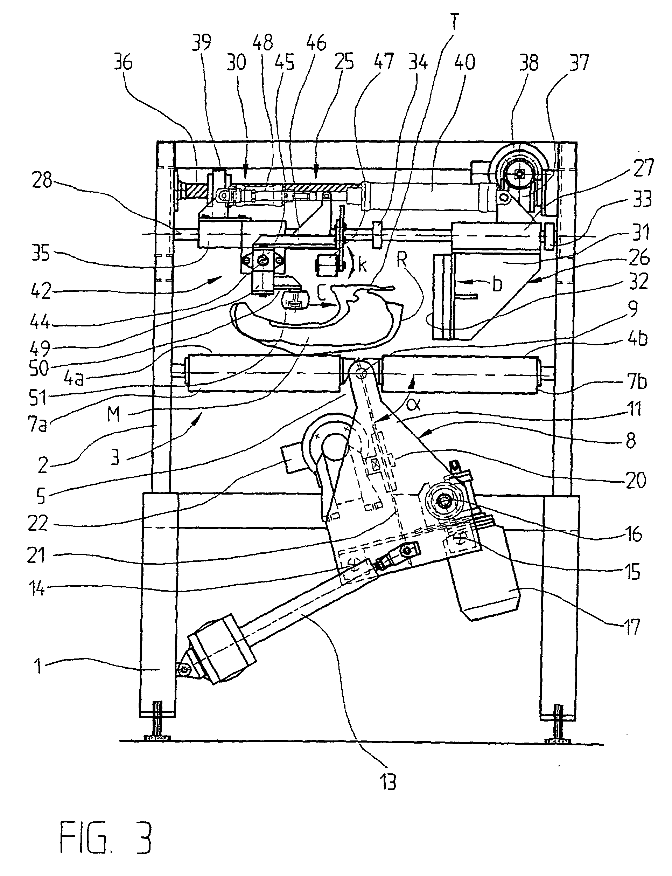

The apparatus according to the invention shown in Figures 3 to 5 is provided with a frame comprising a lower frame 1 resting on a floor and an upper frame 2 connected to the lower frame 1. A belt conveyor 3 is arranged in the upper frame 2 and provided with a conveyor belt 4 which is divided into two conveyor belt parts 4a and 4b by means of a longitudinal slot. At one end the belt conveyor 3 is provided with a driving roller 6 which can be rotated by a motor (not shown) 6 so as to move the conveyor belt in the direction indicated by the arrow a. In the other end the belt conveyor 3 is provided with two idle rollers 7a, 7b arranged axially end to end.

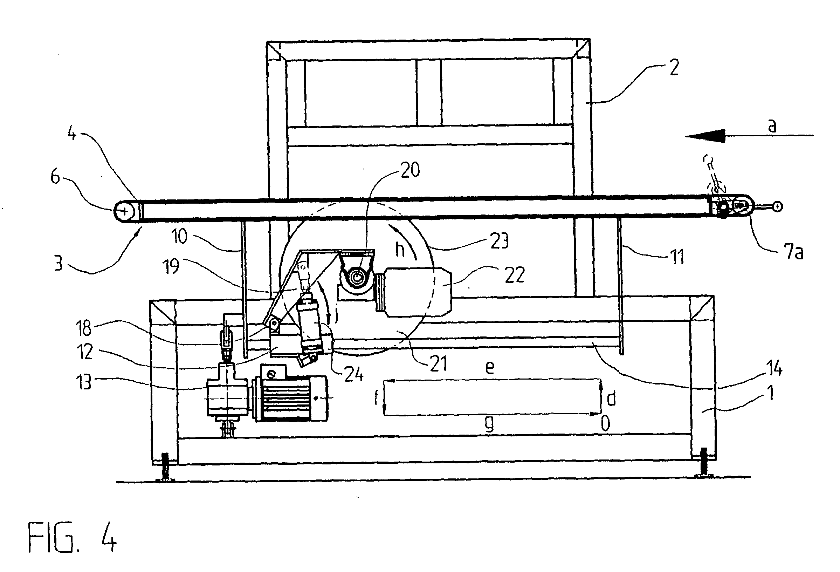

Referring now to Figures 3 and 4, a cradle-like support 8 is pivotally suspended in relation to the frame of the apparatus about a central longitudinal axis 9 situated at a level substantially corresponding to the axes of the three rollers 6; 7a, 7b of the belt conveyor. The cradle-like support 8 has two spaced apart end pieces 10,11 at whose upper ends the pivotal connection with the frame of the apparatus is provided. The cradle-like support 8 may be turned to adopt a desired angle relative to the conveyor belt by means of a spindle motor 13 connected between the lower frame 1 and the end piece 11. Two guide shafts 14, 15 extend longitudinally between the lower portions of the two end pieces 10,11. A slide 12 is displaceably arranged on the guide shafts 14,15, said slide being displaceable by means of spindle drive comprising a spindle 16 arranged between the end pieces 10,11 and a spindle nut connected to the slide and a motor 17. A bracket 19 is arranged pivotally about a transverse axis 18 on the slide 12, a circular knife 21 being arranged rotatably about a transverse axis 20 on said bracket 19 and being made to rotate by means of a motor 22. As shown by means of the arrow j in Figure 4, the bracket 19 and thus the knife 21 can be pivoted about the transverse axis 20 between the neutral position shown in Figures 3 and 4, in which the cutting edge of the knife is below the upper path of the conveyor belt 4, and a cutting position, in which the cutting edge of the knife extends above the conveyor belt. This pivotal movement is effected by means of a pneumatic cylinder/piston unit 24 connected between the slide 12 and the bracket 19 and of a type which can be adjusted to exert a predetermined pressure. As shown in Figure 3, the plane of the knife extends through the slot 5 between the two conveyor belt parts 4a,4b of the belt conveyor.

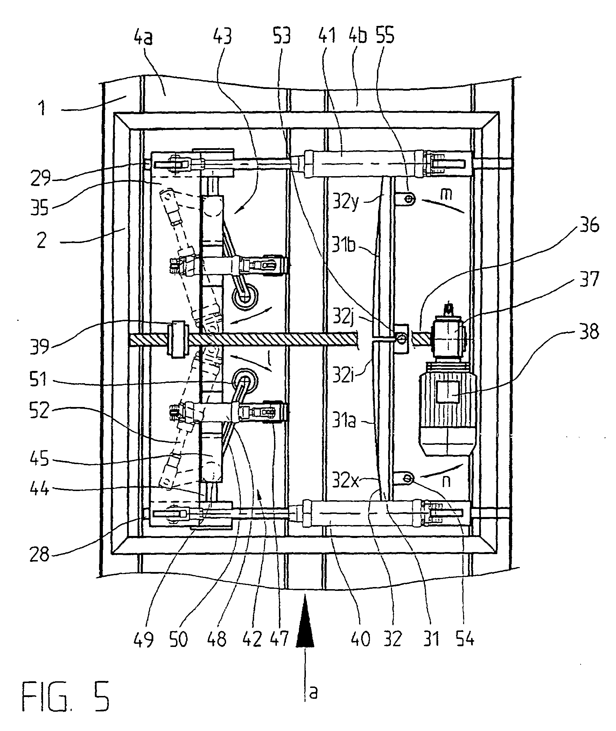

Referring now especially to Figures 3 and 5, the apparatus is provided with a positioning device 25 in the upper frame 2 for positioning a middle M in the desired transverse position in relation to the knife 21 for obtaining the desired longitudinal cutting. The positioning device 25 comprises a support arrangement 26 adapted to support the dorsal side R of a middle M, and a fixing or securing arrangement 30 adapted to press the middle into contact with a support surface of the support arrangement and into contact with the conveyor belt during cutting of the middle M.

The support arrangement 26 comprises a first transverse slide 27 mounted on two mutually parallel transverse guide shafts 28,29 being fixedly connected at their upper ends to the upper frame 2 above the belt conveyor 3. A support member 31 extends downwards from the first transverse slide 27 towards the conveyor belt 4 and ends immediately thereabove. Seen in a top view, the support member 31 has a convex, curved support surface 32 adapted to abut the dorsal side R of the middle M at transverse displacement of the first transverse slide 27 along the transverse guide shafts 28,29 from the initial position shown in Figure 3 and 5, in which the first transverse slide 27 abuts a fixed stop 33, to a position, in which the first transverse slide 27 abuts a second fixed stop 34.

The support member 31 is formed of two halves 31a, 31b being rotatably interconnected about a vertical axis 53. This rotation may be effected by means of cylinder/piston units (not shown) connected with the support member halves 31a, 31b at reference numerals 54 and 55 and with the first transverse slide 27 at suitable positions thereof. When the two halves 31a and 31b are turned in the directions illustrated by the arrows m and n in Figure 5, the outer support surface areas 32x, 32y are transversely displaced in relation to their inner support surface areas 32i,32j corresponding to the middle portion of the support surface 32. The rotation of the two halves 31a and 31b thus enables a change in the shape of the support surface defined by the said support surface areas.

The fixing arrangement 30 comprises a second transverse slide 35 which - as the first transverse slide 27 - is arranged displaceably on the transverse guide shafts 28. The second transverse slide 35 is displaceable between the initial position shown in Figures 3 and 5 and a position, in which retaining rollers of the fixing arrangement engage the middle as described below.

A transverse spindle 36 is arranged substantially centrally in the upper frame 2 above the transverse guide shafts 28, 29 and parallel thereto, the end faces of said spindle being rotatably arranged in the upper frame 2. The spindle is rotated via a gear 37 by means of a motor 38. The spindle 37 is further provided with a spindle nut 39 fixedly connected to the second transverse slide 35, whereby the slide is transversely displaced at rotation of the spindle 36. The two transverse slides 27 and 35 are furthermore interconnected at their upper sides by means of two transverse pneumatic cylinder/piston units 40,41 connected with the slides adjacent the end faces thereof when seen in the longitudinal direction. By means of the cylinder/piston units 40, 41 the first transverse slide 27 and thus the support arrangement 26 may be displaced in relation to the second transverse slide 35 and the fixing arrangement 30. Moreover the two transverse slides 27, 35 and thus the support arrangement 26 and the fixing arrangement 30 may be jointly displaced in transverse direction by means of the spindle drive comprising the motor 38, the gear 37, the transverse spindle 36 and the spindle nut 39, and being connected with the second transverse slide 35.

The fixing arrangement 30 further comprises two fixing units 42, 43 pivotally arranged in relation to the second transverse slide 35 about a longitudinal axis 44. The two fixing units 42, 43 are symmetrical about a central vertical plane through the apparatus, ie. a vertical plane through the transverse spindle 36, for which reason only the fixing unit 42 shown at the bottom of Figure 5 is described in detail. The fixing unit 42 has a bearing block 45 pivotally arranged on the shaft 44. A leg 46 fixedly connected to the bearing block 45 extends inwardly from the bearing block 45 and at its inner end is provided with a fixing means in form of a wheel 47 rotatable about a horizontal axis, the circumference of said wheel being adapted to abut the middle M on the spinal column side T thereof when the bearing block 45 and thus the leg 46 is pivoted about the axis 44 (as shown by the arrow k in Figure 3). This rotation is obtained by means of a pneumatic cylinder 48 secured between the leg 46 and the second transverse slide 35.

A two-armed angled bar 50 is pivotally connected with the bearing block 45 about a vertical axis 49. A fixing means in form of a wheel 51 is rotatably connected about a vertical axis at one end of the bar 50. The other end of the angled bar 50 is via the cylinder/piston unit 52 connected to the bearing block 45. When the cylinder/piston unit is activated, the wheel thus pivots about the vertical axis 49 as shown by means of the arrow 1 in Figure 5.

The apparatus operates in the following manner and is provided with a control unit for controlling the various functions:

A middle M placed in the apparatus is advanced by means of the belt conveyor 3 into the apparatus in the direction shown by the arrow a. When the middle M has been detected by a photocell (not shown), the belt conveyor 3 and thus the middle comes to a halt. The support arrangement 26 is then moved inwardly in the direction of the arrow b in Figure 3 until the slide abuts the fixed stop 34. As a result the support surface 32, which is pre-set to the desired shape, abuts the dorsal side R of the middle M and advances the middle M such that the spinal side T thereof adopts a position below the wheel 47 of the fixing arrangement 30 which is in its initial position. This movement is effected by activating the cylinder/piston units 40 and 41. By subsequently activating the pneumatic cylinder/piston unit 48 of the fixing arrangement, the wheel 47 is pivoted downwards to abut the spinal side T as shown by the arrow k. The second wheel 51 of the fixing arrangement 42,43 is also pivoted downwards. By activating the cylinder/piston unit 52 of the fixing arrangement, the wheel 51 is made to abut the rib side of the middle M and thus presses the dorsal side R of the middle into contact with the support face 32, whereby the spinal column is provided with a curved shape corresponding to the curved shape of the support face 32.

By activating the motor 38 of the spindle 36, the support arrangement 26 and the fixing arrangement 30 are jointly moved in the direction of the arrow c, whereby the middle M is displaced, until the desired position for longitudinal cutting thereof is reached. When the desired position has been reached, the motor 38 is stopped.

The knife 21 being in the position denoted by 0 in Figure 4 is now moved upwards in the direction of the arrow d by activating the cylinder/piston unit 24, the bracket 19 pivoting upwards as shown by the arrow j. By activating the spindle drive 13, the knife 21 is moved in the direction shown by the arrow e and cuts through the middle M, while rotating in the direction of the arrow h. When the middle has been cut, the knife 21 is lowered in the direction of the arrow f by means of the cylinder/piston unit 24 and reversed in the direction of the arrow g to its initial position 0. During the reversal in the direction of the arrow g, the middle is conveyed out of the apparatus by re-starting the conveyor belt. At the same time the support arrangement 26 and the fixing arrangement 30 revert to their initial positions.

By adjusting the pressure exerted by the cylinder/piston unit 24 on the bracket 19 and thus the pressure with which the knife is pressed upwards against the middle M, a separation is obtained, ie. a complete cutting through thereof or a cutting up to the ribs (cuts I and III mentioned in the introduction and shown in Figures 1 and 2). The apparatus may also be provided with or adapted to be provided with equipment for carrying out the cuts II, IV and V. For performing the cuts II, IV and V the apparatus may thus be provided with circular saws arranged above the conveyor belt and being displaceable in longitudinal direction.

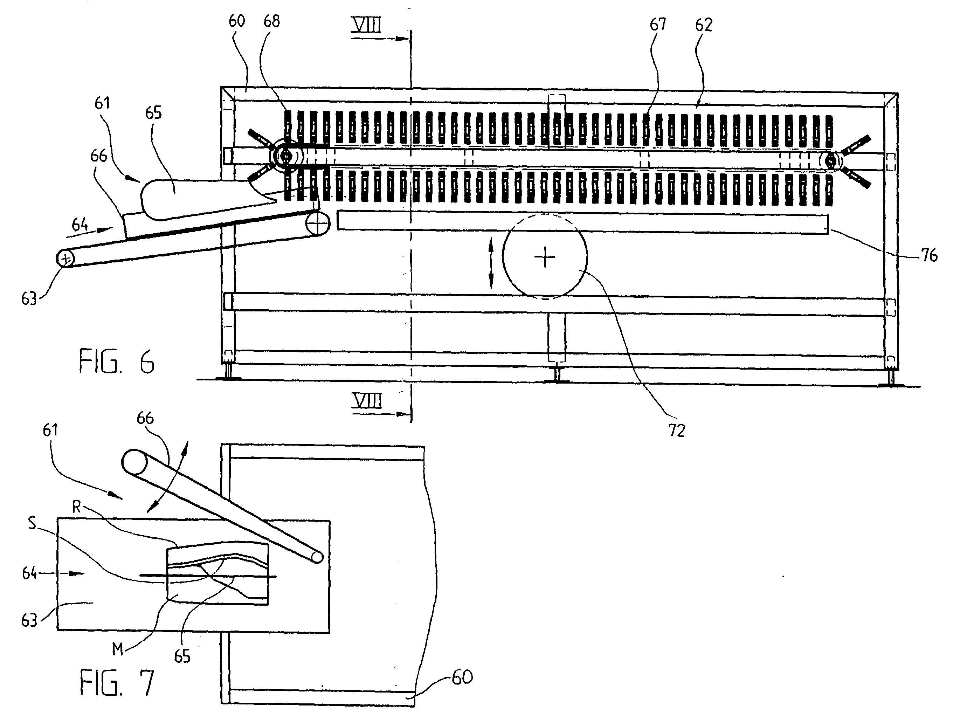

The embodiment of the invention shown in Figures 6 to 9 comprises a frame 60 in which a first conveyor device 61 and a second conveyor device 62 are provided. The first conveyor device 61 comprises a belt conveyor 63, which when seen in the direction of conveyance (shown by the arrow 64), slopes forwards and upwardly towards the second conveyor device 62 and is adapted to advance a middle M arranged thereon with its rind side facing the conveyor belt. The first conveyor device 61 further comprises a first guide member 65 in form of an oblong guide plate arranged substantially perpendicular to the belt conveyor 63 and extending in the direction of conveyance 64 as well as a second oblong guide member 66 arranged substantially perpendicular to the belt conveyor 63 and when seen in the direction of conveyance 64 thereof converging towards the guide plate 65. The second guide member 66 is illustrated as a belt conveyor. During conveyance of the middle M by means of the belt conveyor 63 the dorsal side R of the middle abuts the belt conveyor 66 which thereby moves the middle towards the guide plate 65 and into a position, in which the middle can be transferred to the second conveyor device 62.

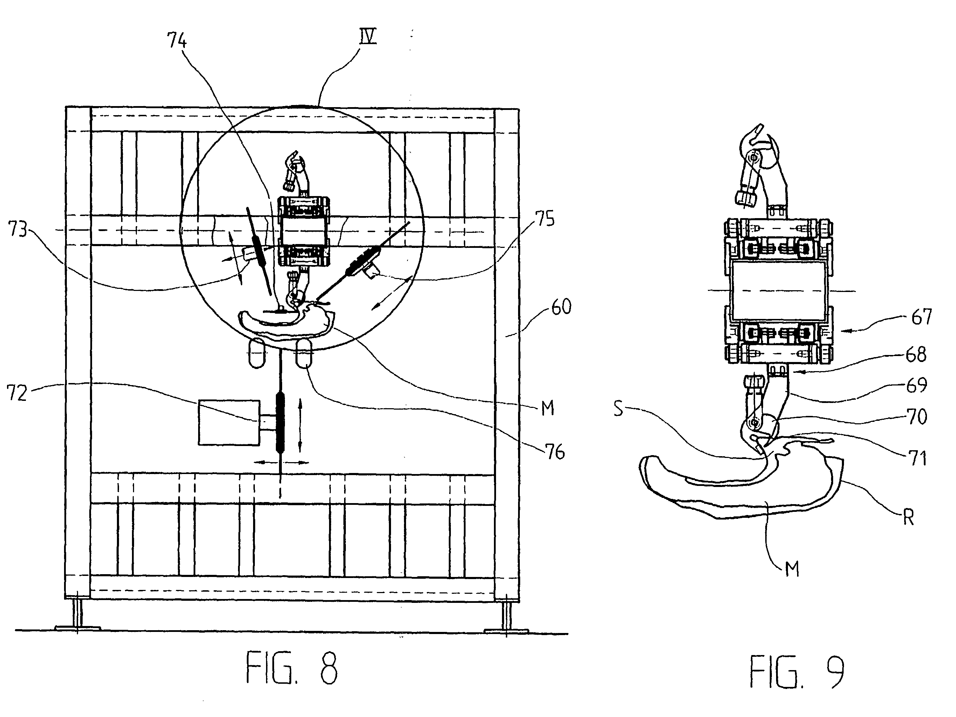

The second conveyor device 62 is arranged above and following the first conveyor device 61 in the direction of conveyance. The second conveyor device 62 comprises a continuous conveyor 67 - in the drawings shown as a chain conveyor - provided with gripping means 68 adapted to retainingly engage parts of the spinal column of the middle M at the exit end of the first conveyor device 61. As clearly shown in Figure 9, the gripping means 68 are shaped as a pair of tongs with a fixed jaw 69 and a jaw 70 pivotally arranged in relation thereto. The fixed jaw 69 has a recess with abutment faces against which the first portions of the spinal column are made to abut when the middle is transferred from the first to the second conveyor device (61,62), the pair of tongs thus being open. The pivotal jaw 70 has a sharp projection 71 adapted to engage other portions of the spinal column of the middle M when pivoted to its gripping position. The projection 71 penetrates into the spinal column 71 for reliably retaining the middle. The predetermined transverse position of the middle is thus determined by the pairs of tongs 68 of the conveyor 67 and maintained during conveyance of the middle M. A first cutting tool 71 - shown as a rotating circular knife - is provided in the frame for cutting the middle M from below, ie from the rind side, at least up to the ribs. The cutting tool 72 is displaceably arranged both in direction toward the middle and transversely thereof such that the depth and the position of the cut may be varied. The first cutting tool 72 is intended for effecting the cuts I and III shown in Figure 1. A second cutting tool 73 is provided for cutting the ribs from the bone side of the middle without substantially cutting into the meat (cut II in Figure 1). This tool is shown as a circular saw and is arranged displaceably in direction toward the middle M and transversely thereof. Furthermore a third cutting tool 74 is provided in the frame 60, said tool shown as a circular saw and adapted for cutting the ribs just below the spinal column (cut V in Figure 1). A fourth cutting tool 75 is provided for rib-top sawing (cut IV in Figure 1).

Finally the apparatus shown in Figures 6 to 9 is provided with a resiliently suspended support 76 for supporting the middle M on its rind side during longitudinal cutting thereof. The support 76 may for instance be formed of supporting rods or a roller or belt conveyor. It should furthermore be noted that the apparatus also may be provided with a second support (not shown) for supporting the bone side of middle M during cutting thereof.

## Claims

1. Apparatus for longitudinal cutting of middles (M) including the spinal column (S) and ribs (L) of half carcasses, said apparatus comprising a conveyor device (4;61,62) for conveying a middle along a conveyance path with its rind side facing downwards, a positioning device (25; 65, 66, 67) for positioning the middle in a predetermined transverse position, and a cutting tool (21;72) for carrying out said cutting by a relative longitudinal movement between the tool and the middle **characterised in that** the cutting tool (21; 72) is mounted below the conveyance path of the middle for cutting the middle from below, ie. from the rind side thereof, at least up to the ribs.

2. Apparatus according to claim 1, **characterised in that** the cutting tool (21; 72) is a rotating circular knife with an axis of rotation arranged below the conveyance path of the middle.

3. Apparatus according claim 1 or 2, **characterised in that** the conveyor device (4) comprises a roller or belt conveyor provided with a longitudinal slot for the cutting tool (21).

4. Apparatus according to one or more of the preceding claims, **characterised in that** the positioning device (25) comprises a support member (31) arranged displaceably in the transverse direction of the conveyor device and adapted to be brought into engagement with the dorsal side (R) of the middle, and further a fixing means (47,50) arranged displaceably in the transverse direction of the conveyor device for securing the middle (M) in relation to the support member (31).

5. Apparatus according to one or more of the preceding claims, **characterised in that** the conveyor device comprises:
- a first section (61) comprising a roller or belt conveyor (63) for supportingly conveying the middle (M),
- guide members (65,66) for guiding the middle (M) into the predetermined transverse position, and
- a second section (62) following the first section (61) in the direction of conveyance and comprising a driven continuous conveyor (67) provided with gripping members (68) which are adapted to engage portions of the spinal column of the middle (M) for advancing this in the predetermined transverse position during the longitudinal cutting.

6. Apparatus according to claim 5, **characterised in that** the second conveyor device section (62) comprises support members (76) for supporting the middle (M) from below, ie from the rind side, during the cutting thereof.

7. Apparatus according to one or more of the preceding claims, **characterised in that** it comprises a further cutting tool (73), preferably a rotating circular saw, for longitudinal cutting of the ribs from the bone side without substantially cutting into the meat (cut II in Figure 1).

8. Apparatus according to one or more of the preceding claims, **characterised in that** it comprises a further cutting tool (74), preferably in form of a rotating circular saw, for longitudinal cutting of the ribs from the bone side of the middle just below the spinal column without substantially cutting into the meat (cut V in Figure 1).

9. Apparatus according to one or more of the preceding claims, **characterised in that** it comprises a further cutting tool (75), preferably a rotating circular saw, for rib-top cutting (cut IV in Figure 1).

10. Method for longitudinal cutting up of middles (M) including the spinal column (S) and ribs (L) of half carcasses, and comprising the following steps:
a. placing a middle (M) on a conveyor device (4; 61, 62), the rind side of the middle facing downward and the spinal column extending substantially in the direction of conveyance of the conveyor,
b. advancing the middle (M) along a conveyance path by means of the conveyor device (4; 61, 62),
c. positioning the middle in a predetermined transverse position at transverse displacement thereof by means of a positioning device (25; 65, 66, 67),
d. carrying out the longitudinal cutting of the middle by a relative movement between the middle and a cutting tool (21; 72),
**characterised in that** the longitudinal cutting of the middle (M) is carried out from below, ie. from the rind side thereof, and at least up to the ribs, the cutting tool (21;72) being mounted below the conveyance path of the middle.

## Patentansprüche

1. Vorrichtung zum Längsschneiden von Mittelteilen (M), einschließlich der Wirbelsäule (S) und der Rippen (L), von Karkassenhälften, wobei die Vorrichtung eine Fördervorrichtung (4; 61, 62) zum Fördern eines Mittelteils entlang einem Förderweg mit nach unten weisender Schwartenseite, eine Positioniervorrichtung (25; 65, 66; 67) zum Positionieren des Mittelteils in einer vorbestimmten transversalen Position, und ein Schneidwerkzeug (21; 72) aufweist, um das Schneiden durch eine relative Längsbewegung zwischen dem Werkzeug und dem Mittelteil durchzuführen, **dadurch gekennzeichnet, daß** das Schneidwerkzeug (21; 72) unterhalb des Förderwegs des Mittelteils angeordnet ist, um das Mittelteil von unten, d.h. von der Schwartenseite, bis mindestens zu den Rippen zu schneiden.

2. Vorrichtung nach Anspruch 1, **dadurch gekennzeichnet, daß** das Schneidwerkzeug (21; 72) ein drehendes Kreismesser mit einer unter dem Förderweg des Mittelteils angeordneten Drehachse ist.

3. Vorrichtung nach Anspruch 1 oder 2, **dadurch gekennzeichnet, daß** die Fördervorrichtung (4) einen Rollen- oder Gurtförderer aufweist, der mit einem Längsschlitz für das Schneidwerkzeug (21) versehen ist.

4. Vorrichtung nach einem der vorhergehenden Ansprüche, **dadurch gekennzeichnet, daß** die Positioniervorrichtung (25) ein Stützteil (31) aufweist, das in Querrichtung zur Fördervorrichtung verschiebbar und in angriff an der dorsalen Seite (R) des Mittelteils bringbar ist, und ferner eine Fixiereinrichtung (47, 50) aufweist, die in Querrichtung der Fördervorrichtung verschiebbar ist, um das Mittelteil (M) in bezug auf das Stützteil (31) zu sichern.

5. Vorrichtung nach einem dervorhergehenden Ansprüche, **dadurch gekennzeichnet, daß** die Fördervorrichtung aufweist:
- einen ersten Abschnitt (61) mit einem Rollen- oder Gurtförderer (63) zum stützenden Fördern des Mittelteils (M),
- Führungsteile (65, 66) zum Führen des Mittelteils (M) in die vorbestimmte transversale Position, und
- einen zweiten Abschnitt (62), der dem ersten Abschnitt (61) in Förderrichtung folgt, und einen angetriebenen Endlosförderer (67) aufweist, der mit Greifteilen (68) versehen ist, die zum Angreifen an Bereichen der Wirbelsäule des Mittelteils (M) ausgebildet sind, um diese während des Schneidens in die vorbestimmte transversale Position zu bewegen.

6. Vorrichtung nach Anspruch 5, **dadurch gekennzeichnet, daß** der zweite Fördervorrichtungsabschnitt (62) Stützteile (76) aufweist, die das Mittelteil (M) während des Schneidens von unten, d.h. von der Schwartenseite her, stützen.

7. Vorrichtung nach einem der vorhergehenden Ansprüche, **dadurch gekennzeichnet, daß** sie ein weiteres Schneidwerkzeug (73), vorzugsweise eine drehende Kreissäge, zum Längsschneiden der Rippen von der Knochenseite her aufweist, ohne im wesentlichen in das Fleisch zu schneiden (Schnitt II in Figur 1).

8. Vorrichtung nach einem der vorhergehenden Ansprüche, **dadurch gekennzeichnet, daß** sie ein weiteres Schneidwerkzeug (74), vorzugsweise in Form einer drehenden Kreissäge, aufweist, um die Rippen von der Knochenseite der Mitte unmittelbar unter der Wirbelsäule zu schneiden, ohne im wesentlichen in das Fleisch zu schneiden (Schnitt V in Figur 1).

9. Vorrichtung nach einem der vorhergehenden Ansprüche, **dadurch gekennzeichnet, daß** sie ein weiteres Schneidwerkzeug (75), vorzugsweise eine drehende Kreissäge, zum Schneiden der Rippenoberseite aufweist (Schnitt IV in Figur 1).

10. Verfahren zum Längsschneiden von Mittelteilen (M), einschließlich Wirbelsäule (S) und Rippen (L) von Karkassenhälften, und mit den folgenden Schritten:
a. Anordnen eines Mittelteils (M) auf einer Fördervorrichtung (4; 61, 62), wobei die Schwartenseite des Mittelteils nach unten weist und die Wirbelsäule sich im wesentlichen in der Förderrichtung des Förderers erstreckt,
b. Bewegen des Mittelteils (M) entlang eines Förderwegs mittels der Fördervorrichtung (4; 61, 62),
c. Anordnen des Mittelteils in einer vorbestimmten transversalen Position durch transversales Verschieben desselben mittels einer Positioniervorrichtung (25; 65, 66, 67),
d. Ausführen des Längsschneidens des Mittelteils durch eine Relativbewegung zwischen dem Mittelteil und einem Schneidwerkzeug (21; 72),
**dadurch gekennzeichnet, daß**
das Längsschneiden des Mittelteils (M) von unten her, d.h. von der Schwartenseite, und mindestens bis zu den Rippen erfolgt, wobei das Schneidwerkzeug (21; 72) unter dem Förderweg des Mittelteils angeordnet ist.

## Revendications

1. Appareil pour la découpe longitudinale de parties médianes (M) comprenant la colonne vertébrale (S) et les côtes (L) de demi-carcasses, ledit appareil comportant un dispositif de transport (4; 61, 62) destiné à transporter une partie médiane le long d'un passage de transport avec son côté peau orienté vers le bas, un dispositif de positionnement (25; 65, 66, 67) destiné à positionner la partie médiane dans une position transversale prédéterminée, et un outil de coupe (21; 72) destiné à réaliser ladite découpe par un mouvement longitudinal relatif entre l'outil et la partie médiane, **caractérisé en ce que** l'outil de coupe (21; 72) est monté sous le passage de transport de la partie médiane afin de couper la partie médiane par en dessous, c'est-à-dire depuis le côté peau au moins jusqu'aux côtes.

2. Appareil selon la revendication 1, **caractérisé en ce que** l'outil de coupe (21; 72) est un couteau circulaire rotatif avec un axe de rotation disposé sous le passage de transport de la partie médiane.

3. Appareil selon la revendication 1 ou 2, **caractérisé en ce que** le dispositif de transport (4) comporte un transporteur à rouleau ou à bande pourvu d'une fente longitudinale pour l'outil de coupe (21).

4. Appareil selon une ou plusieurs des revendications précédentes, **caractérisé en ce que** le dispositif de positionnement (25) comporte un élément de support (31) disposé de manière à être déplacé dans la direction transversale du dispositif de transport et prévu pour être amené en engagement avec le côté dorsal (R) de la partie médiane, et en outre des moyens de fixation (47, 50) disposés de manière à être déplacés dans la direction transversale du dispositif de transport de façon à fixer la partie médiane (M) par rapport à l'élément de support (31).

5. Appareil selon une ou plusieurs des revendications précédentes, **caractérisé en ce que** le dispositif de transport comporte :
une première section (61) comportant un transporteur à rouleau ou à bande (63) destiné à transporter de manière supportée la partie médiane (M),
des éléments de guidage (65, 66) destinés à guider la partie médiane (M) dans la position transversale prédéterminée, et
une deuxième section (62) qui suit la première section (61) dans la direction de transport et comportant un transporteur continu entraîné (67) pourvu d'éléments de saisie (68) qui sont prévus pour engager des parties de la colonne vertébrale de la partie médiane (M) afin d'avancer celle-ci dans la disposition transversale prédéterminée pendant la découpe longitudinale.

6. Appareil selon la revendication 5, **caractérisé en ce que** la deuxième section de dispositif transporteur (62) comporte des éléments de support (76) destinés à supporter la partie médiane (M) par en dessous, c'est-à-dire depuis le côté peau, pendant sa découpe.

7. Appareil selon une ou plusieurs des revendications précédentes, **caractérisé en ce qu'**il comporte un outil de coupe additionnel (73), de préférence une scie circulaire rotative, destinée à la découpe longitudinale des côtes depuis le côté os sans découper de manière substantielle la viande (découpe II sur la figure 1).

8. Appareil selon une ou plusieurs des revendications précédentes, **caractérisé en ce qu'**il comporte un outil de coupe additionnel (74), de préférence sous la forme d'une scie circulaire rotative, pour la découpe longitudinale des côtes depuis le côté os de la partie médiane juste en dessous de la colonne vertébrale sans découper de manière substantielle la viande (découpe V sur la figure 1).

9. Appareil selon une ou plusieurs des revendications précédentes, **caractérisé en ce qu'**il comporte un outil de coupe additionnel (75), de préférence une scie circulaire rotative, pour la découpe du dessus de côte (découpe IV sur la figure 1).

10. Procédé de découpe longitudinale de parties médianes (M) comprenant la colonne vertébrale (S) et les côtes (L) de demi-carcasses, et comportant les étapes suivantes :
a. mise en place d'une partie médiane (M) sur un dispositif de transport (4; 61, 62), le côté peau de la partie médiane étant orienté vers le bas et la colonne vertébrale s'étendant sensiblement dans la direction de transport du transporteur,
b. l'avance de la partie médiane (M) le long du passage de transport au moyen du dispositif de transport (4; 61, 62),
c. le positionnement de la partie médiane dans une position transversale prédéterminée dans un déplacement transversal au moyen d'un dispositif de positionnement (25; 65, 66, 67),
d. la réalisation de la découpe longitudinale de la partie médiane par un mouvement relatif entre la partie médiane et un outil de coupe (21; 72),
**caractérisé en ce que** la découpe longitudinale de la partie médiane (M) est réalisée par en dessous, c'est-à-dire depuis son côté peau, et au moins jusqu'aux côtes, l'outil de coupe étant monté sous le passage de transport de la partie médiane.
